# EUROPEAN PATENT SPECIFICATION

(11) **EP 0 611 279 B1**
(45) Date of publication and mention of the grant of the patent: **16.09.1998**
(21) Application number: 92922750.2
(22) Date of filing: 03.11.1992
(51) Int. Cl.: A01G 31/02, A01G 27/00

(54) **A PLANT RAISING DEVICE**
VORRICHTUNG FÜR DAS ZÜCHTEN VON PFLANZEN
DISPOSITIF SERVANT A FAIRE POUSSER DES PLANTES

(30) Priority: 09.11.1991 GB 9123864; 06.07.1992 GB 9214341
(43) Date of publication of application: 24.08.1994
(60) Divisional application: 95113981.5
(73) Proprietor: PETTYFER, Alan Derek Spencer, Woodbridge, Suffolk IP13 8LG (GB)
(72) Inventor: PETTYFER, Alan Derek Spencer, Woodbridge, Suffolk IP13 8LG (GB)
(74) Representative: Copp, David Christopher
(86) International application number: GB9202027
(87) International publication number: WO9308681

(56) References cited:
- EP-A- 0 108 241
- EP-A- 0 210 702
- EP-A- 0 462 018
- WO-A-84/02827
- GB-A- 2 093 673
- GB-A- 2 131 663
- US-A- 3 243 919
- US-A- 3 381 410
- US-A- 4 213 274
- US-A- 4 231 188

## Description

This invention relates to a plant raising device for use in supplying water and nutrients to growing plants. The invention is particularly effective when used with a growing bag, and the invention extends to a method of raising plants in a growing bag.

Growing bags are widely used for growing a variety of crops such as tomatoes, cucumbers and peppers and are used by both professional nurserymen and amateur gardeners. Growing bags comprise a plastic (usually polyethylene) bag containing a compost-like growing medium. To use the bags, they are laid on a flat surface, holes are cut in one wall of the bag to expose the growing medium, and a plant is planted in the growing medium.

The term 'growing bag' as used in this specification includes any type of bag-like structure which contains a moisture retaining medium in which plants can be grown. The moisture retaining medium may be compost or may be some other medium to which plant nutrients can be added as necessary.

Growing bags have been successful because they offer an easily locatable and easily replaceable growing medium. The gardener can place them wherever he chooses.

There are however problems arising from the use of growing bags. Firstly, when the growing medium is watered, there is a tendency for some of this medium to be washed out of the top of the bag and onto the surrounding ground. Secondly, watering takes a long time and is imprecise, since the water can only be applied over a relatively small area of the growing medium. Thirdly, the plant roots tend to grow towards the most moist part of the growing medium and therefore they tend to work towards the surface of the growing medium, rather than extending down into the medium.

It is known from WO84/02827 to make holes in one face of a growing bag and to insert in these holes plant containers in which plants can grow. In this case, the plants have to be watered directly into these plant containers, onto the top of the plant growing medium.

According to the present invention, there is provided a plant raising device, the device comprising a body, an opening through the body for receiving plant growing medium, a water trough surrounding the opening with holes for the passage of water formed through the walls of the trough, and a downwardly extending annular wall arranged beneath the trough, radially outside the holes through the walls of the trough.

The device is preferably moulded from plastics material, and to assist the moulding process, the walls form, when seen in cross-section, a generally frusto-conical shape. One or both of the walls can have steps formed in them with the steps lying generally normal to the axis of the trough, with the holes being formed in the steps, and thus parallel to the axis of the trough.

The open top of the trough may be provided with a covering of a mesh or the like to allow water or other liquids to enter the trough but to prevent leaves or petals of plants falling into the trough.

In use, a hole is cut in the top of a growing bag of a size which allows all the apertures of the trough to lead directly into the growing medium. The device is then placed over the hole, and a plant is planted in the hollow collar. The outer edge of the water trough sits on the edges of the hole cut in the wall of the bag, so that the growing medium is not exposed around the outside of the device. The growing medium is only exposed within the hollow collar.

In a preferred method of use, the hole in the bag is cut so as to just allow the downwardly extending wall to pass through the hole. The wall then prevents any migration of the growing medium out of the hole. In a particularly preferred embodiment, the bottom edge of the wall has serrations or other bag wall cutting or perforating means so that the hole in the bag can be cut by forcing the device onto the top wall of the bag. The piece of bag wall material which is thus cut out can be removed through the collar.

Preferably the collar forms the inner wall of the trough and is higher than the outer wall of the trough, so that if the trough is overfilled, the excess water overflows from the outer wall and does not enter the growing bag.

The water trough may include water volume measuring means, so that a precise quantity of water can be fed to a plant.

Preferably the water reservoir has a known volume and is arranged so that the water can flow out of the reservoir at a slower rate than it can be poured into the reservoir.

The invention will now be further described, by way of example, with reference to the accompanying drawings, in which:
Figure 1 is a perspective view of a growing bag illustrating a method of raising plants in accordance with the prior art;
Figure 2 is a view corresponding to Figure 1 but showing plants being raised using a device and method in accordance with the invention;
Figure 3 is a cross-section through a plant being raised in accordance with the invention;
Figure 4 is a side view of a plant raising device in accordance with the invention;
Figure 5 is a plan view of the device of Figure 4; and
Figure 6 shows a planter in which a number of devices in accordance with the invention are used.

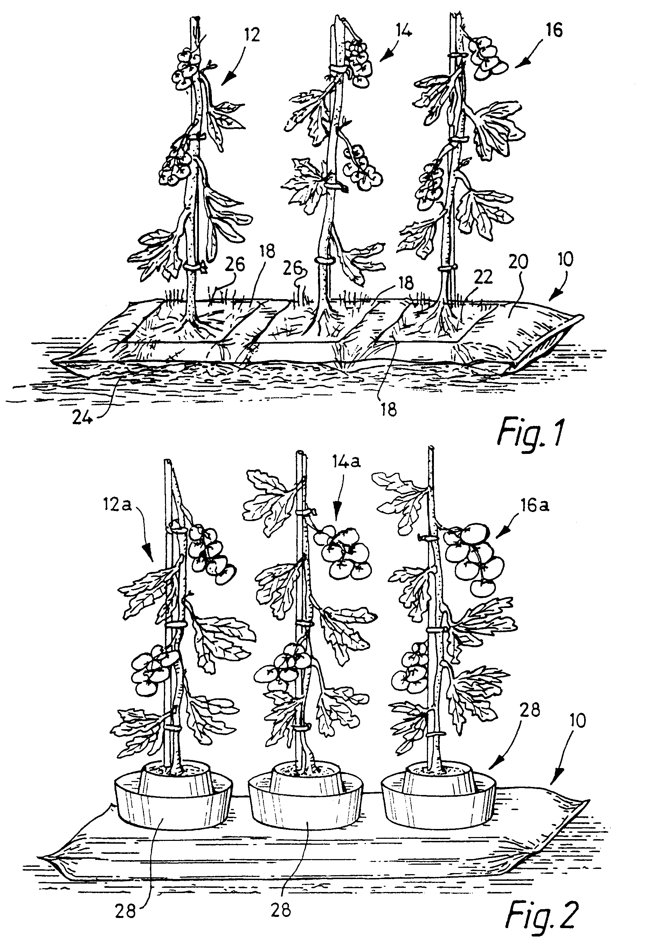

Figure 1 shows a growing bag 10 in which three tomato plants 12, 14, 16 are growing in a manner which is already known. Three square apertures 18 have been cut from the top panel 20 of the bag, and the plants have been planted in the centre of each of these apertures 18. When the growing medium 22 exposed by the apertures 18 is watered, some of the growing medium washes out of the bag and comes to lie on the ground at 24. This looks messy. In addition the quantity of water supplied to the plants cannot be accurately measured because some of it soaks into the growing medium 22, but some washes over the side of the bag. Furthermore because there is more water near the surface than at the bottom of the bag, the plant roots 26 tend to grow towards the surface, and eventually they emerge from the surface which is undesirable. In particular, compost erosion due to watering causes roots to be exposed causing dryness and damage with possible disease. Liquid mineral feed can also become locked-in after a time and the shallow depth of the growing bag then tends to amass both first (nutrient) and secondary (water uptake) root systems which further hinder effective accurate watering and feeding.

In the arrangement according to the invention, shown in Figure 2, the plants 12a, 14a, 16a are planted in the material of the growing bag 10, through plant raising devices generally indicated at 28. The devices 28 cover the aperture cut in the top panel of the bag, so that there is no growing medium exposed outside the devices 28. Furthermore the plants can be watered and fed through the devices 28 to ensure an accurate and effective feeding regime.

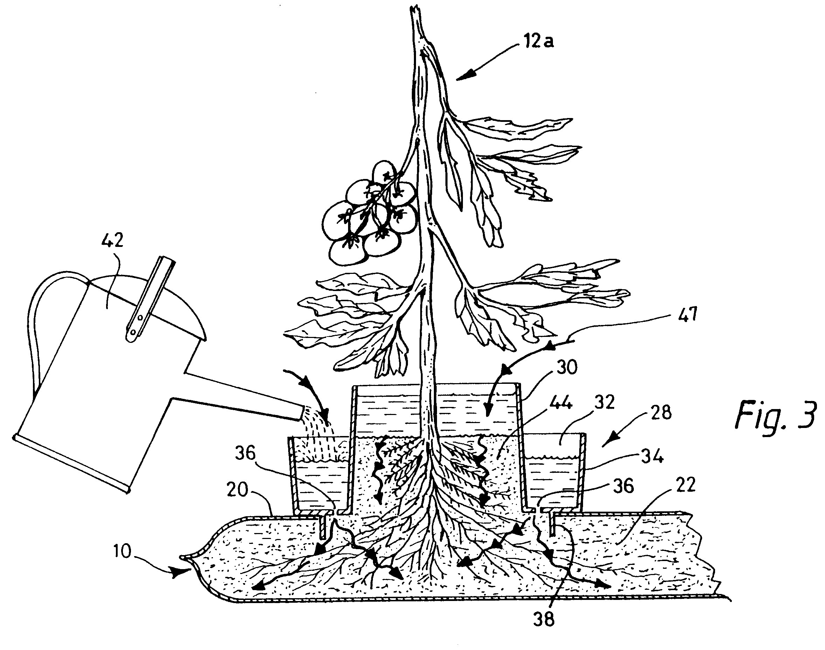

This is shown in more detail in Figure 3. The device 28, which is a one-piece plastics moulded body, has a collar 30 surrounded by an annular water trough 32. The collar 30 forms an inner wall of the trough 32, and the trough has an outer wall 34. At the base of the trough are water dispersion apertures 36.

To use the device, a hole is cut in the top panel 20 of the bag 10 of a size smaller than the area encompassed by the outer wall 34 of the trough. Beneath the trough is a downwardly extending annular wall 38 which has a tapered outer face 39, and this wall serves to define the size of hole required to be cut in the top panel 20. As can be seen, the base of the trough sits on the top panel 20 to provide a seal to prevent growing medium from escaping from the bag via the hole cut in the top panel.

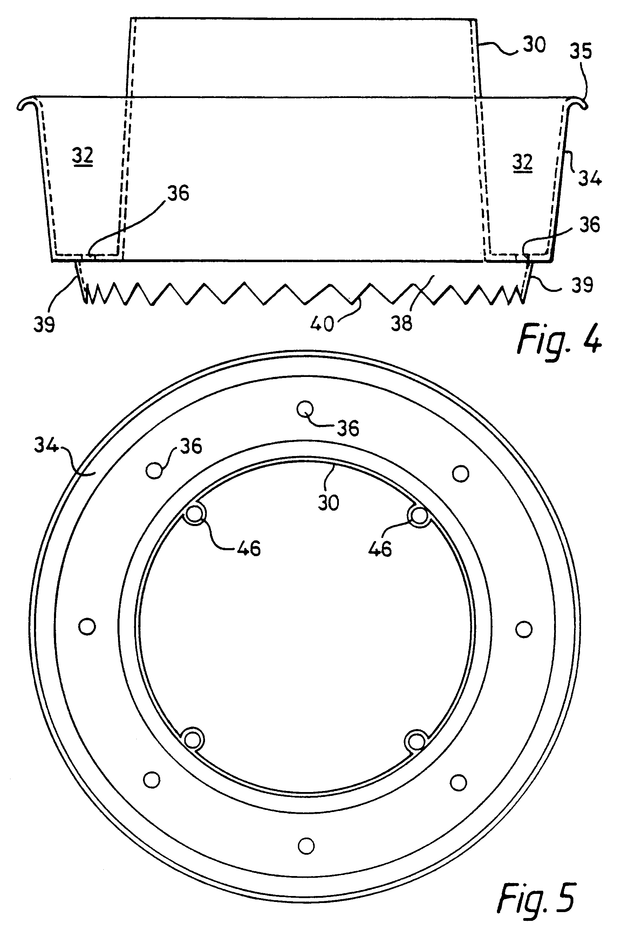

Figure 4 shows how the wall 38 can have a serrated bottom edge so that the wall can itself form the cutting tool which cuts the aperture in the panel 20 of the bag.

The top rim 35 of the outer wall 34 is turned outward as shown to prevent crawling insects or slugs from reaching the plant.

In use, a growing bag 10 is placed flat on the surface where the plants are to be grown. A number of plant raising devices 28 corresponding to the number of holes to be cut in the bag are placed on the top panel 20 of the bag, and are positioned relative to one another and to the bag as desired. The devices are then each pressed down and rotated so that the serrated edge 40 of each downwardly extending wall 38 cuts through the material of the growing bag to separate a circular piece of material from the panel 20. The device 28 is then pushed firmly down into the bag so that the edge of the hole in the bag is stretched around the tapered face 39 of the wall 38, to form a seal. The device is pushed far enough in until the bottom of the trough 32 sits on the top panel of the bag around the aperture. By reaching in through the collar 30, the separated piece of wall material can be pulled out and discarded.

It will be noted that the device will cut a circular hole in the top panel of the bag. The circular perimeter of the hole will form a good seal with the outer face 39 of the wall 38. Furthermore, a circular hole is less likely than a square or rectangular hole to lead to subsequent splitting of the bag material, and therefore the integrity of the bag should be retained for a relatively long time.

Next, a small quantity of potting compost or like material is placed inside the collar 30 and the plant seedling is planted in this compost. Now a proper feeding and watering regime can commence.

The plant is watered by using a watering can 42 or a hose to fill the trough 32. Depending on the requirements of the particular plant, the trough may either be filled to the brim as defined by the outer wall 34, or can be filled to a predetermined level within the trough. A separate water level measuring device may be incorporated, or graduations may be moulded into the wall of the trough. The water will disperse over a period of time, through the openings 36 into the growing medium 22. The holes 36 should be of a size such as to allow gradual dispersion of the water through the growing medium.

When the plant is young, and when the compost 44 appears dry, then further water may be introduced through the collar 30 as indicated by the arrow 46.

Plant food and nutrients can be placed in the top of the collar 30 and can be watered in as required.

In order for the device to be economically manufactured as an injection moulding, there needs to be a taper on the inner and outer walls of the trough. The inner and outer walls may also be stepped. Although the shape of the trough shown in Figures 4 and 5 is optimised for injection moulding, other shapes are possible, and the holes 36 may extend through the walls in a direction radially of the trough axis.

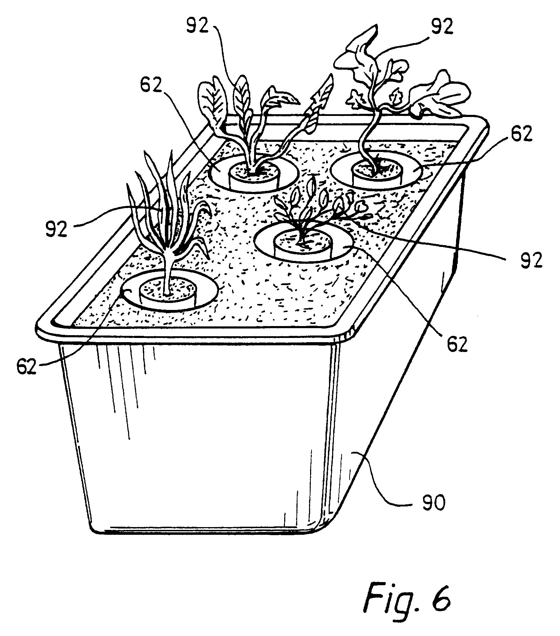

Devices in accordance with the invention can also be used in other plant containers, or directly in open soil. Figure 6 shows a container 90 in which four different plants 92 are shown, each planted in the centre opening of a respective trough 62. The plants are watered through the troughs 62, and this leads to optimum root growth and thus to healthy plants.

Raising plants in this way has a number of advantages. These are listed as follows:
- It is easy to supply the plant with an accurately known quantity of water.
- It is easy to supply the plant with an accurately known quantity of foodstuffs or nutrients.
- The increased depth resulting from the presence of the compost 44 encourages both first and second root systems giving healthy plant growth. In this way, use of the device simulates the advantageous ring culture system.
- Diseases, pests, algae and weeds are minimised because only a minimum area of compost is exposed to the air.
- Erosion of the compost by watering and/or feeding is minimised thus preventing an unsightly mess around the growing bag.
- Top dressing can be easily applied if necessary and will not be washed away when next watering.
- Healthier plants result in improved crop yield.
- The risk of the growing medium and/or the plants being disturbed by animals is substantially reduced.

The plant raising device 28 can be conveniently be manufactured by injection moulding of plastics. The device can be used over and over again.

In addition, and as shown in Figure 5, the collar 30 can support integrally moulded sockets 46 for a plant support framework.

The use of the plant raising device as shown in Figures 2 to 5 and of the method here described allow greatly improved efficiency of operation using growing bags and facilitates the production of healthy plants with good yields.

## Claims

1. A plant raising device, the device comprising a body, an opening through the body for receiving plant growing medium, a water trough (32; 62) surrounding the opening with holes (36) for the passage of water formed through the walls of the trough (32), and a downwardly extending annular wall (38) arranged beneath the trough (32; 62), radially outside the holes (36).

2. A plant raising device as claimed in Claim 1, wherein the bottom edge of the wall has bag wall cutting or perforating means.

3. A plant raising device as claimed in Claim 1 or Claim 2, wherein the inner wall of the water trough bounds the opening and is higher than the outer wall of the trough.

4. A plant raising device as claimed in any preceding claim, wherein the opening is surrounded on all sides by the trough.

5. A plant raising device as claimed in any preceding claim, wherein the trough is annular.

6. A plant raising device as claimed in any preceding claim, wherein the body is moulded in one piece from plastics material.

7. A plant raising device as claimed in Claim 6, wherein the walls of the trough form, when seen in cross-section, generally frusto-conical shapes.

8. A plant raising device as claimed in Claim 7, wherein the walls have steps formed in them with the steps lying generally normal to the axis of the body, with the holes being formed in the steps, and thus parallel to the axis of the body.

9. A plant raising device as claimed in any preceding claim, wherein the open top of the trough is provided with a covering of a mesh or the like.

10. A plant raising device as claimed in any preceding claim, wherein the water trough includes water volume measuring means.

11. A method of raising plants in a growing bag, wherein a hole is cut in a top panel of the bag, a plant raising device which has a water trough surrounding an opening in which a plant can be grown and a downwardly extending annular wall arranged beneath the trough is placed in the hole to extend downwardly into the growing bag and the water trough is arranged so that water can flow from the trough into the hole.

12. A method as claimed in Claim 11, wherein the water trough has a known volume and is arranged so that the water can flow out of the trough at a slower rate than it can be poured into the trough.

## Patentansprüche

1. Vorrichtung für das Züchten von Pflanzen mit einem Grundkörper, einer Öffnung in dem Grundkörper für die Aufnahme von Pflanzenwachstumssubstanzen, einer die Öffnung umgebenden Wasserrinne (32, 62) mit Löchern (36), die für den Durchgang von Wasser in der Wandung der Rinne (32) ausgebildet sind, und einer sich nach unten erstreckenden, ringförmigen Wand (38), die unterhalb der Rinne (32) radial außerhalb der Löcher angeordnet ist.

2. Vorrichtung nach Anspruch 1, bei der der untere Rand der Wand Einrichtungen zum Perforieren oder Schneiden von Beutelwandungen aufweist.

3. Vorrichtung nach Anspruch 1 oder 2, bei der die innere Wand der Rinne die Öffnung begrenzt und höher als die äußere Wand der Rinne ausgebildet ist.

4. Vorrichtung nach mindestens einem der voranstehenden Ansprüche, bei der die Öffnung von allen Seiten von der Rinne umgeben ist.

5. Vorrichtung nach mindestens einem der voranstehenden Ansprüche, bei der die Rinne ringförmig ausgebildet ist.

6. Vorrichtung nach mindestens einem der voranstehenden Ansprüche, bei der der Grundkörper in einem Stück aus Kunststoff geformt ist.

7. Vorrichtung nach Anspruch 6, bei der die Wandung der Rinne, im Querschnitt gesehen, im wesentlichen kegelstumpfförmig ausgebildet ist.

8. Vorrichtung nach Anspruch 7, wobei die Wände stufig ausgebildet sind und die Stufen im wesentlichen senkrecht zur Achse des Grundkörpers liegen, wobei die Löcher in den Stufen und damit parallel zur Achse des Grundkörpers ausgebildet sind.

9. Vorrichtung nach mindestens einem der voranstehenden Ansprüche, bei der der offene Oberteil der Rinne mit einer maschenartigen Abdeckung oder ähnlichem versehen ist.

10. Vorrichtung nach mindestens einem der voranstehenden Ansprüche, bei der die Wasserrinne Vorrichtungen zum Messen des Wasservolumens aufweist.

11. Verfahren zum Züchten von Pflanzen in einem Wachstumsbeutel, bei dem ein Loch in eine obere Hüllbahn des Beutels geschnitten wird, eine Vorrichtung zum Züchten von Pflanzen mit einer von einer Wasserrinne umgebenden Öffnung, in der Pflanzen gezüchtet werden können, und einer sich nach unten erstreckenden, ringförmigen Wand, die unterhalb der Rinne angeordnet ist, in dem Loch so angeordnet wird, daß sie sich nach unten in den Wachstumsbeutel erstreckt, und die Wasserrinne so angeordnet wird, daß das Wasser von der Rinne in das Loch fließen kann.

12. Verfahren nach Anspruch 11, bei dem die Wasserrinne ein bekanntes Volumen aufweist und so angeordnet ist, daß das Wasser langsamer aus der Rinne herausfließen als es in die Rinne eingegossen werden kann.

## Revendications

1. Dispositif servant à faire pousser des plantes, le dispositif comprenant un corps, une ouverture à travers le corps pour recevoir le milieu de croissance de la plante, un bac à eau (32 ; 62) entourant l'ouverture avec des trous (36) pour le passage de l'eau, trous ménagés à travers les parois du bac (32) et une paroi annulaire (38) s'étendant vers le bas, disposée au-dessous du bac (32 ; 62), radialement à l'extérieur des trous (34).

2. Dispositif servant à faire pousser des plantes selon la revendication 1, dans lequel le bord inférieur de la paroi comporte des moyens de perforation ou de découpe de paroi de poche.

3. Dispositif servant à faire pousser des plantes selon la revendication 1 ou la revendication 2, dans lequel la paroi inférieure du bac à eau délimite l'ouverture et présente une plus grande hauteur que la paroi extérieure du bac.

4. Dispositif servant à faire pousser des plantes selon l'une quelconque des revendications précédentes, dans lequel l'ouverture est entourée de tous côtés par le bac.

5. Dispositif servant à faire pousser des plantes selon l'une quelconque des revendications précédentes, dans lequel le bac est annulaire.

6. Dispositif servant à faire pousser des plantes selon l'une quelconque des revendications précédentes, dans lequel le corps est moulé en une seule pièce à partir d'un matériau plastique.

7. Dispositif servant à faire pousser des plantes selon la revendication 6, dans lequel les parois du bac forment, vu en section transversale, de façon générale des formes tronconiques.

8. Dispositif servant à faire pousser des plantes selon la revendication 7, dans lequel les parois présentent des gradins ménagés dans celle-ci, les gradins se situant en général perpendiculairement à l'axe du corps, avec des trous ménagés dans les gradins, et ainsi parallèlement à l'axe du corps.

9. Dispositif servant à faire pousser des plantes selon l'une quelconque des revendications précédentes, dans lequel la partie supérieure du bac est munie d'un couvercle en treillis ou similaire.

10. Dispositif servant à faire pousser des plantes selon l'une quelconque des revendications précédentes, dans lequel le bac à eau comprend des moyens de mesure du volume d'eau.

11. Procédé servant à faire pousser des plantes dans une poche de culture, un trou étant découpé dans le flanc supérieur de la poche, un dispositif servant à faire pousser des plantes qui comporte un bac à eau entourant une ouverture dans laquelle on peut faire pousser une plante et une paroi annulaire s'étendant vers le bas au-dessous du bac est placée dans le trou pour s'étendre vers le bas jusque dans la poche de croissance et le bac à eau est disposé de telle sorte que l'eau peut s'écouler à partir du bac jusque dans le trou.

12. Procédé selon la revendication 11, dans lequel le bac à eau présente un volume connu et il est disposé de telle sorte que l'eau peut s'écouler du bac à un débit inférieur au débit d'eau versé dans le bac.
